Europäisches Patentamt

European Patent Office

Office européen des brevets

(19)

(11) Veröffentlichungsnummer: **0 021 406**
**B1**

(12) # EUROPÄISCHE PATENTSCHRIFT

(45) Veröffentlichungstag der Patentschrift:
02.06.82

(51) Int. Cl.³: **G 03 B 41/18**

(21) Anmeldenummer: **80103565.0**

(22) Anmeldetag: **24.06.80**

(54) Filmkassette mit einem Fenster zum Einbelichten von Daten.

(30) Priorität: **27.06.79 DE 2925837**

(43) Veröffentlichungstag der Anmeldung:
**07.01.81 Patentblatt 81/1**

(45) Bekanntmachung des Hinweises auf die Patenterteilung:
**02.06.82 Patentblatt 82/22**

(84) Benannte Vertragsstaaten:
**BE FR GB IT NL SE**

(56) Entgegenhaltungen:
**DE-A-2 710 699**
**DE-B-2 714 704**
**DE-C-2 646 725**

(73) Patentinhaber: **AGFA-GEVAERT Aktiengesellschaft,
D-5090 Leverkusen 1 (DE)**

(72) Erfinder: **Bauer, Walter, Heinr.-Wieland-Strasse 178,
D-8000 München 83 (DE)**
Erfinder: **Färber, Heinrich, Dietlindenstrasse 9,
D-8000 München 40 (DE)**

BUNDESDRUCKEREI BERLIN

Filmkassette mit einem Fenster zum Einbelichten von Daten

Die Erfindung betrifft eine Filmkassette, insbesondere Röntgenfilmkassette, mit einem Fenster zum Einbelichten von Daten, einer verschiebbaren Fensterklappe zum lichtdichten Verschließen des Fensters und einem durch eine Einwirkung von außen lösbaren, mit der Fensterklappe verbundenen Verriegelungsglied, das durch ein Federelement in einer Verriegelungsstellung haltbar ist.

Bei einer bekannten Kassette der eingangs genannten Art (DE-C2-2 646 725) ist als Verriegelungsglied eine Wippe vorgesehen, welche durch eine Feder in einer das Fenster verriegelnden Stellung gehalten wird. Durch eine von außen angreifende Magnetkraft kann die Wippe gegen die Federkraft aus ihrer Sperrstellung gebracht werden, so daß das Fenster zum Zwecke des Einbelichtens von Daten aufgeschoben werden kann. Zu diesem Zweck ist ein Einbelichtungsgerät geschaffen worden, das durch Projektion die individuellen Daten auf den Film in der Kassette gibt. Dazu wird eine Kassette in das Gerät eingesetzt, in welchem sich auch der Magnet zur Betätigung der Wippe befindet. Außerdem weist das Gerät einen Greifer auf, der das Fenster an einem an diesem ausgeformten Vorsprung auf- und zuschieben kann.

Ein solches Kassettenfenster ist verhältnismäßig aufwendig, da die Wippe aus einem ferromagnetischen Werkstoff bestehen muß. Außerdem ist bei einem solchen System ein Magnet in dem dazugehörenden Behandlungsgerät notwendig.

Aufgabe der Erfindung ist es daher, eine Filmkassette der eingangs genannten Art einfacher auszubilden, wobei außerdem eine Anpassung an unterschiedliche Fenstergrößen vorgesehen sein soll.

Diese Aufgabe wird durch die im Kennzeichen des Anspruchs 1 beschriebene Erfindung gelöst.

Mit der Erfindung wird eine einfache Entriegelungsmöglichkeit zu niedrigen Herstellungskosten erreicht, wobei ebenfalls die Forderung erfüllt ist, daß sich das Fenster durch Stoßen oder manuell nicht öffnen lassen darf.

Zur Anpassung an unterschiedliche Gerätetypen kann die Fenstergröße dadurch variiert werden, daß die Fensterklappe generell für das größte Fenster ausgebildet ist, unterhalb der Fensterklappe jedoch noch eine einen kleineren Fensterausschnitt begrenzende Abdeckung vorgesehen ist, welche an einer eingeprägten Abrißlinie zum Zwecke der Fenstervergrößerung ausgebrochen werden kann. Dies ist insbesondere für die beiden zur Zeit gültigen Fenstergrößen von Bedeutung, welche ein schmales, sog. europäisches und ein breites, sog. amerikanisches Aufbelichtungsfeld umfaßt.

Weitere Einzelheiten und Vorteile der Erfindung ergeben sich aus den Unteransprüchen im Zusammenhang mit der Beschreibung von Ausführungsbeispielen, welche anhand von Figuren eingehend erläutert sind. Es zeigt

Fig. 1 eine Draufsicht auf einen Teil einer Röntgenfilmkassette mit dem erfindungsgemäßen Fenster,

Fig. 2 einen Querschnitt II-II aus Fig. 1,

Fig. 3 eine Teilansicht der Unterseite des Kassettendeckels und

Fig. 4 einen Querschnitt IV-IV aus Fig. 3.

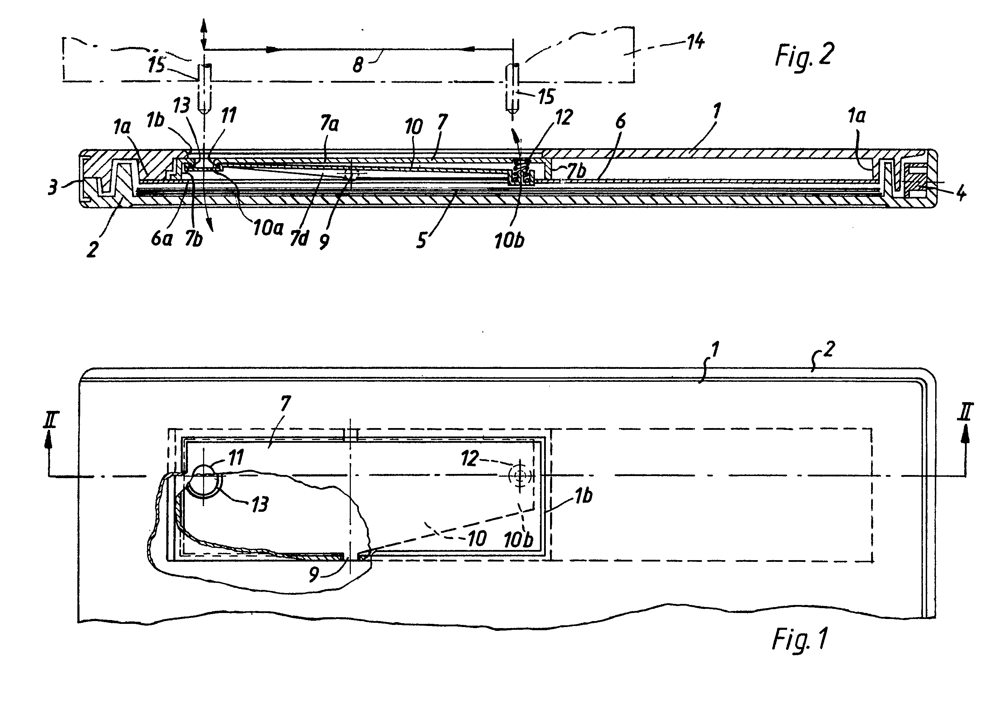

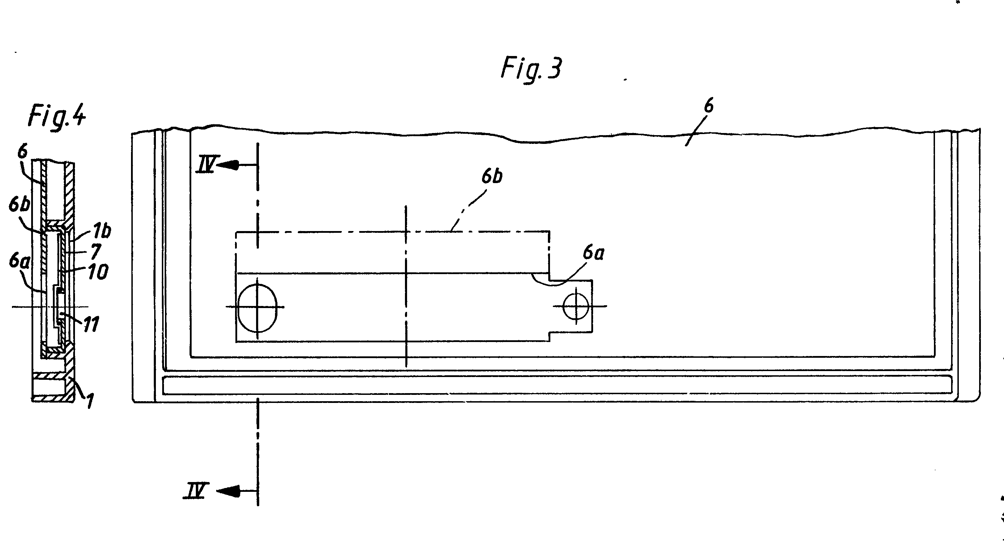

In den Fig. 1 bis 4 ist mit 1 ein Kassettendeckel und mit 2 ein Kassettenboden bezeichnet, welche beide über ein Scharnier 3 miteinander verbunden sind. Auf der dem Scharnier 3 gegenüberliegenden Seite befindet sich ein nicht weiter beschriebener Kassettenverschluß 4. Auf dem Kassettenboden 2 ist ein aus Röntgenfilm und Verstärkerfolien bestehender Pack 5 aufgelegt. An der Innenseite des Kassettendeckels 1 sind zum Kassettenboden 2 gerichtete Erhebungen bzw. Stege 1a ausgeformt, welche eine Abdeckplatte 6 tragen. Wie am besten aus der Fig. 3 und 4 zu ersehen ist, weist die Abdeckplatte 6 eine das Belichtungsfenster oberhalb des Filmes begrenzende Aussparung 6a auf. Ferner ist in der Abdeckplatte 6 eine eingeprägte Abrißlinie 6b vorgesehen, entlang der ein Stück der Abdeckplatte zur Vergrößerung des Fensters 6a herausgebrochen werden kann.

Gegenüber dem Fenster 6a in der Abdeckplatte ist im Kassettendeckel eine etwa gleich große Aussparung 1b vorgesehen. Zwischen Kassettendeckel 1 und Abdeckplatte 6 ist eine Fensterklappe 7 eingesetzt, welche entlang nicht dargestellter, am Kassettendeckel 1 ausgeformter Führungen in einer zur Längsseite der Aussparung 1b verlaufenden Richtung 8 verschoben werden kann. Die Fensterklappe 7 weist eine die Aussparung 1b abdeckende Hauptfläche 7a sowie über die Breite der Fensteröffnungen 6a bzw. 6a + 6b hinausgehende Laufstege 7b auf. Außerdem sind an den beiden Längsseiten der Fensterklappe 7 nach innen gerichtete Seitflansche 7d vorgesehen, in welchen die Achse 9 eines zweiarmigen Hebels bzw. einer Wippe 10 gelagert ist. Schließlich ist in dem Flächenteil 7a der Fensterklappe 7 eine Bohrung 11 ausgeformt, derart, daß diese in beiden Verschiebe-Endstellungen der Fensterklappe 7 in der Aussparung 1b des Kassettendeckels verbleibt.

Die an der Fensterklappe 7 angelenkte Wippe 10 besteht im wesentlichen aus einem länglichen Streifen, welcher aus einem festen Kunststoff bestehen kann und der mit einem seiner Enden 10a die Bohrung 11 in der Fensterklappe 7 überdeckt und an seinem anderen Ende eine Aufnahme für eine sich an der Innenseite der Fensterklappe 7 abdruckenden Druckfeder 12 trägt. Im Ruhezustand der Wippe 10 gemäß Fig. 2 ist diese so angeordnet, daß das mit der Druckfeder 12 zusammenwirkende andere Ende 10b in die Aussparung 6a der Abdeckplatte 6 ragt, womit eine Verschiebung der Fensterklappe 7 verhindert ist. Das eine Ende 10a weist eine kreisförmige Vertiefung auf, welche mit einer ringförmigen Erhebung an der Innenseite der Klappe 7 um die Bohrung 11 zusammenwirkt und zum Zwecke der Lichtabdichtung eine Lichtverschneidung 13 bildet.

Im Betrieb kann nun die Kassette in ein Aufbelichtungsgerät 14 eingesetzt werden, in welchem der Fensterteil gegenüber der Umgebung lichtdicht abgeschlossen wird. Zum Zwekke der Einbelichtung von Daten wird nun von dem Gerät zunächst ein Stift 15 in die Bohrung 11 der Fensterklappe 7 geführt, welcher bei seiner weiteren Bewegung auf das Ende 10a der Wippe 10 drückt und damit die Wippe gegen die Kraft der Feder 12 gegen den Uhrzeigersinn gemäß Fig. 2 dreht. Dabei wird das andere Ende 10b der Wippe aus der Aussparung 6a der Abdeckplatte 6 herausgehoben, womit die Fensterklappe 7 entriegelt ist. Damit kann nun die zweite Phase der Fensteröffnung erfolgen, bei welcher der Stift 15 eine seitliche Bewegung entlang der Linie 8 durchführt und die Fensterklappe 7 zwischen Kassettendeckel 1 und Abdeckplatte 6 in Fig. 2 nach rechts bewegt. Danach liegt der Film offen in den Aussparungen 6a bzw. 6b und 1b und kann von einer nicht dargestellten Beleuchtungseinrichtung in dem Gerät 14 belichtet werden. Nach der Belichtung wird der Stift 15 entlang der Richtung 8 wieder nach links (Fig. 2) bewegt und nach dem Verschließen der Aussparung 6a durch die Fensterklappe 7 aus der Bohrung 11 gezogen, wobei die Feder 12 die Wippe 10 wieder in die in Fig. 2 dargestellte Lage drückt, in welcher das eine Ende 10a aufgrund der Lichtverschneidung die Bohrung 11 lichtdicht verschließt. Das andere Ende 10b der Wippe fällt wieder in die Aussparung 6a, wodurch die Fensterklappe 7 verriegelt wird und weder durch Stoß noch durch eine irrtümliche Bewegung von Hand geöffnet werden kann. Damit kann die Kassette aus dem Aufbelichtungsgerät 14 wieder entnommen und einem anderen Behandlungsvorgang zugeführt werden.

## Patentansprüche

1. Filmkassette, insbesondere Röntgenfilmkassette, mit einem Fenster zum Einbelichten von Daten, einer verschiebbaren Fensterklappe zum lichtdichten Verschließen des Fensters und einem durch eine Einwirkung von außen lösbaren, mit der Fensterklappe verbundenen Verriegelungsglied, das durch ein Federelement in einer Verriegelungsstellung haltbar ist, dadurch gekennzeichnet, daß in der Fensterklappe (7) eine Öffnung (11) zur Aufnahme eines in einem Behandlungsgerät (14) integrierten und nach zwei Richtungen verschiebbaren Öffnungsstiftes (15) vorgesehen ist und das Verriegelungsglied (10) lichtdicht hinter dieser Öffnung (11) derart angeordnet ist, daß mit dem Einführen des Öffnungsstiftes (15) das Verriegelungsglied (10) in die entriegelte Stellung bringbar ist.

2. Filmkassette nach Anspruch 1, dadurch gekennzeichnet, daß das Verriegelungsglied ein zweiarmiger, um eine Achse (9) drehbar gelagerter Hebel (10) ist, von welchem ein Ende (10a) hinter der Öffnung (11) in der Fensterklappe (7) liegt und das andere Ende (10b) in Verriegelungsstellung in eine kassettenfeste Aussparung (6a) ragt.

3. Filmkassette nach Anspruch 2, dadurch gekennzeichnet, daß die Achse (9) des Hebels (10) in an der Fensterklappe (7) ausgeformten Seitenteilen (7d) gelagert ist.

4. Filmkassette nach Anspruch 2 oder 3, dadurch gekennzeichnet, daß zwischen der Fensterklappe (7) und dem anderen Ende (10b) des Hebels (10) eine Druckfeder (12) eingesetzt ist.

5. Filmkassette nach einem der Ansprüche 2 bis 4, dadurch gekennzeichnet, daß für ein lichtdichtes Verschließen der Öffnung (11) im Verriegelungszustand an dieser sowie an dem einen Ende (10a) des Hebels (10) Erhebungen bzw. Vertiefungen zur Bildung einer Lichtverschneidung (13) ausgeformt sind.

6. Filmkassette nach einem der Ansprüche 1 bis 5, dadurch gekennzeichnet, daß die Fensterklappe (7) zwischen einer eine Fensteraussparung (1b) aufweisenden Kassettenwand (1) und einer eine weitere Fensteraussparung (6a) aufweisenden Abdeckplatte (6) geführt ist, welche auf nach innen gerichteten Abstandsstegen (1a) der Kassettenwand (1) angeordnet ist.

7. Filmkassette nach Anspruch 6, dadurch gekennzeichnet, daß die Fensterklappe (7) mit einer Hauptfläche (7a) an der Innenseite der Kassettenwand (1) anliegt und über Laufstege (7b) sich an der Abdeckplatte (6) abstützt.

8. Filmkassette nach einem der Ansprüche 5 bis 7, dadurch gekennzeichnet, daß in der Abdeckplatte (6) neben deren Fensteraussparung (6a) Abreißlinien (6b) zum Zwecke der Vergrößerung des Fensterausschnittes durch Ausbrechen eingeprägt sind.

## Claims

1. Film cassette, especially an X-ray film cassette, having a window for projecting in data, a displaceable shutter for the light-tight closure of the window and a locking member which is releasable by operation from outside, is connected to the shutter and can be held in a locking position by a spring element, characterised in that an aperture (11) is provided in the shutter (7) for receiving an opening pin (15) which is an integral part of a treatment device (14) and can be displaced in two directions, and the locking member (10) is so arranged in a light-tight manner behind this aperture (11) that, on the insertion of the opening pin (15), the locking member (10) can be brought into the unlocking position.

2. Film cassette according to claim 1, characterised in that the locking member is a two-armed lever (10) pivoted about a shaft (9), one end (10a) of which lever lies behind the aperture (11) in the shutter (7) and the other end (10b) of which projects, in the locking position, into an aperture (6a) which is in a fixed location in the cassette.

3. Film cassette according to claim 2, characterised in that the shaft (9) of the lever (10) is supported in side portions (7d) formed in the shutter (7).

4. Film cassette according to claim 2 or 3, characterised in that a pressure spring (12) is inserted between the shutter (7) and the other end (10b) of the lever (10).

5. Film cassette according to one of claims 2 to 4, characterised in that, for a light-tight closure of the aperture (11) in the locked position, raised portions and depressions are formed at that aperture and at the one end (10a) of the lever (10), respectively, in order to form a light trap (13).

6. Film cassette according to one of claims 1 to 5, characterised in that the shutter (7) is guided between a cassette wall (1) having a window aperture (1b) and a cover plate (6) having a further window aperture (6a), which cover plate is arranged on spacer ridges (1a) of the cassette wall (1) which are directed inwards.

7. Film cassette according to claim 6, characterised in that the shutter (7) lies with one main surface (7a) against the inside of the cassette wall (1) and rests on the cover plate (6) via flanges (7b).

8. Film cassette according to one of claims 5 to 7, characterised in that tear lines (6b) are impressed in the cover plate (6) near its window aperture (6a) in order that the size of the window may be increased by breaking out.

**Revendications**

1. Cassette pour film, en particulier cassette pour film radiographique, du type comportant une fenêtre pour la reproduction, par exposition, de données, un volet de fenêtre glissant pour obturer la fenêtre de façon étanche à la lumière, et un organe de verrouillage relié au volet de fenêtre et capable d'être maintenu dans sa position de verrouillage par un élément de ressort, caractérisée par le fait qu'il est prévu dans le volet de fenêtre (7) une ouverture (11) destinée à recevoir une cheville d'ouverture (15) intégrée dans un appareil de traitement (14) et mobile dans deux directions, et que l'organe de verrouillage (10) est disposé, de manière étanche à la lumière, derrière cette ouverture (11) de façon qu'avec l'introduction de la cheville d'ouverture (15), l'organe de verrouillage (10) est susceptible d'être amené dans la position déverrouillée.

2. Cassette pour film selon la revendication 1, caractérisée par le fait que l'élément de verrouillage est constitué par un levier à deux bras (10) articulé sur un axe (9), levier dont une extrémité (10a) se situe derrière l'ouverture (11) ménagée dans le volet de fenêtre (7) et dont l'autre extrémité (10b) pénètre, dans la position de verrouillage, dans une ouverture (6a) portée par la cassette.

3. Cassette pour film selon la revendication 2, caractérisée par le fait que l'axe (9) du levier (10) est monté dans des éléments latéraux (7d) conformés sur le volet de fenêtre (7).

4. Cassette pour film selon la revendication 2 ou 3, caractérisée par le fait qu'entre le volet de fenêtre (7) et ladite autre extrémité (10b) du levier (10), est monté un ressort de pression (12).

5. Cassette pour film selon l'une des revendications 2 à 4, caractérisée par le fait que pour une fermeture étanche à la lumière de l'ouverture (11), à l'état verrouillé, des parties saillantes ou des dépressions servant à former un coupe-lumière (13) sont ménagées au niveau de ladite ouverture (11) et de la première extrémité (10a) du levier (10).

6. Cassette pour film selon l'une des revendications 1 à 5, caractérisée par le fait que le volet de fenêtre (7) est guidé entre une paroi de cassette (1) comportant une ouverture de fenêtre (1b) et une plaque de recouvrement (6) comportant une seconde ouverture de fenêtre (6a), plaque de recouvrement qui est disposée sur des barrettes d'entretoises (1a) dirigées vers l'intérieur et portées par la paroi de cassette (1).

7. Cassette pour film selon la revendication 6, caractérisée par le fait que le volet de fenêtre (7) porte par une surface principale (7a) contre la face intérieure de la paroi de cassette (1), et prend appui, par l'intermédiaire de barrettes de déplacement (7b), contre la plaque de recouvrement (6).

8. Cassette pour film selon l'une des revendications 5 à 7, caractérisée par le fait que l'on prévoit, sous forme d'une empreinte, dans la plaque de recouvrement (6), près de son ouverture de fenêtre (6a), des lignes de rupture (6b) permettant d'agrandir, par rupture, l'ouverture de fenêtre.

Fig. 2

Fig. 1

*Fig. 3*

*Fig. 4*

0 021 406